# FASCICULE DE BREVET EUROPEEN

(11) **EP 1 598 231 B1**
(45) Date de publication et mention de la délivrance du brevet: **20.08.2008**
(21) Numéro de dépôt: 05300343.0
(22) Date de dépôt: 29.04.2005
(51) Int. Cl.: B60K 13/04

(54) **Dispositif de maintien d'un écran thermique**
Haltevorrichtung für ein Hitzeschild
Holding device for heat shield

(30) Priorité: 17.05.2004 FR 0450959
(43) Date de publication de la demande: 23.11.2005
(73) Titulaire: RENAULT S.A.S., 92100 Boulogne Billancourt (FR)
(72) Inventeur: Pepin, Didier, 78000 Versailles (FR)

(56) Documents cités:
- US-A- 4 349 078
- US-A- 6 058 702
- US-A- 6 131 252

## Description

L'invention concerne un dispositif de maintien d'un écran thermique entre un élément de caisse et un plot d'échappement qui sont fixés l'un à l'autre par un moyen de fixation. Un tel dispositif est montré par le US 4 349 078 A1.

Pour relier une ligne d'échappement, à la caisse d'un véhicule, au moins deux plots sont fixés à la caisse du véhicule, par un moyen de fixation tels qu'une vis et un écrou. Différents types de plots existent, les plots progressifs et les plots non progressifs. Les plots non progressifs peuvent comporter, en particulier, un doigt limiteur qui oscille entre les parois du plot de façon à limiter les débattements de la ligne d'échappement. Pour éviter de transmettre la chaleur de la ligne d'échappement à la caisse, un écran thermique est inséré entre la caisse et la ligne d'échappement. Le moyen de fixation traverse alors l'écran thermique. La présence de l'écran thermique engendre un coefficient de frottement affaibli entre le moyen de fixation et la caisse. Le plot peut alors glisser et ne plus assurer sa fonction de fixation à la caisse du véhicule et ceci d'autant plus quand le plot est un plot non progressif comportant un doigt limiteur. En effet, le doigt limiteur transmet les vibrations des débattements de la ligne au plot qui peut entraîner le desserrage du moyen de fixation.

Afin de pallier ces inconvénients, l'invention a pour objet d'assurer une protection de la caisse de véhicule de la chaleur émise par la ligne d'échappement tout en assurant un bon maintien de la fixation d'un plot d'échappement dans le temps.

A cet effet, l'invention propose un dispositif de maintien d'un écran thermique du type cité ci-dessus, caractérisé en ce que qu'une excroissance est intercalée entre l'écran thermique et le plot de façon à exercer une pression sur l'écran thermique quand le plot d'échappement est fixé par sa surface d'appui sur la caisse.

Selon d'autres caractéristiques de l'invention, l'excroissance est en caoutchouc et est portée par le plot d'échappement.

Selon d'autres caractéristiques de l'invention, l'excroissance est moulée sur le plot.

Selon d'autres caractéristiques de l'invention, l'excroissance est portée par l'écran thermique.

Selon d'autres caractéristiques de l'invention, l'écran thermique comporte une découpe de façon à laisser passer la surface d'appui pour permettre de fixer directement la surface d'appui sur la caisse par le moyen de fixation.

Selon d'autres caractéristiques de l'invention, la surface d'appui comporte un moyen anti-rotation qui peut être par exemple une rugosité.

Selon d'autres caractéristiques de l'invention, un plot d'échappement comporte un dispositif de maintien d'un écran thermique.

Selon d'autres caractéristiques de l'invention, une ligne d'échappement comporte un plot d'échappement comportant un dispositif de maintien d'un écran thermique.

D'autres caractéristiques et avantages de l'invention apparaîtront à la lecture de la description d'exemples de réalisation en référence aux dessins annexés dans lesquels :
La figure 1 est une vue en coupe longitudinale d'un plot d'échappement non progressif à doigt limiteur selon l'invention.
La figure 2 est une vue en perspective d'une partie d'écran thermique et d'une partie d'un plot d'échappement comportant une excroissance selon l'invention.

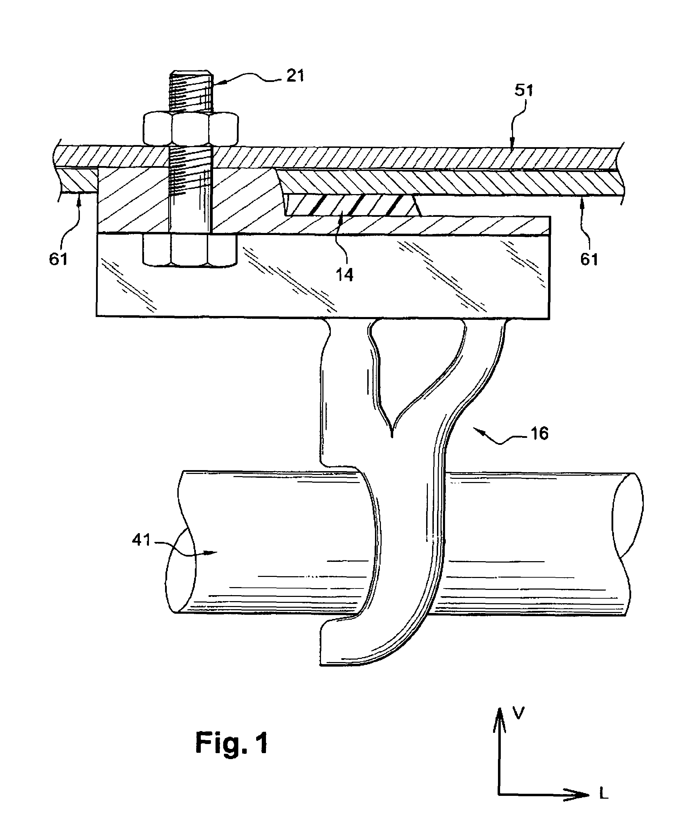

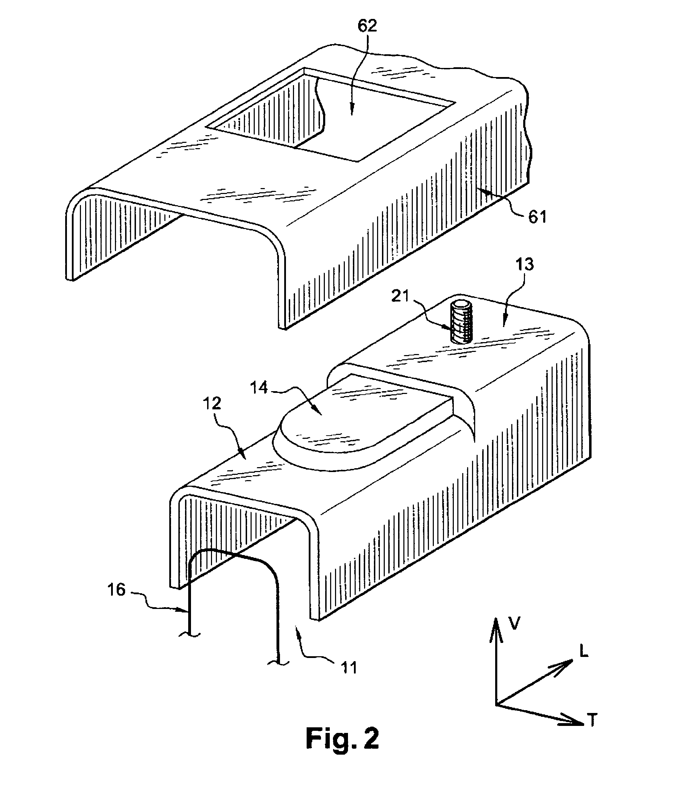

Dans la description qui suit, nous prendrons à titre non limitatif une orientation longitudinale, vertical et transversale indiquée par le trièdre L,V,T des figures 1 et 2 .

Des éléments identiques ou analogues sont désignés par les mêmes chiffres de référence.

Tel que représenté à la figure 1, un plot 11 non progressif d'échappement est fixé à la fois sur une ligne d'échappement 41 et sur une caisse de véhicule 51. Pour éviter de transmettre la chaleur émise par la ligne d'échappement 41, un écran thermique 61 est inséré entre le plot d'échappement 11 et la caisse de véhicule 51.

Le plot 11 permet de maintenir la ligne d'échappement 41 à la caisse du véhicule 51. Le plot 11 est fixé à la paroi de la caisse 51 au niveau de sa paroi longitudinale 12 du côté opposé au doigt limiteur 16 sur une surface d'appui 13 en acier. Le moyen de fixation 21 utilisé peut être du type vis-écrou.

L'écran thermique 61 est inséré entre la caisse 51 du véhicule et le plot d'échappement 11. L'écran thermique est, en général, en aluminium gaufré. L'écran thermique 61 est découpé de façon à créer une ouverture de taille légèrement supérieure à la surface d'appui 13 du plot d'échappement 11 permettant le contact direct de la surface d'appui 13 du plot 11 sur la caisse 51 et limitant ainsi les risques de glissement du plot 11. Un moyen anti-rotation peut être ajouté sur la surface d'appui 13 pour limiter le risque de desserrage du moyen de fixation 21 à la caisse 51. Il est possible, par exemple, de rendre rugueuse la surface d'appui 13 par un grenaillage.

Pour maintenir l'écran thermique 61, la partie longitudinale 12 du plot d'échappement 11 comporte une excroissance 14 en caoutchouc à côté de la surface d'appui 13 en acier. Telle que représentée sur la figure 1, quand le plot 11 est fixé à la caisse 51, l'excroissance 14 se trouve compressée contre l'écran thermique ce qui permet le placage de l'écran thermique 61 sur la caisse 51. L'épaisseur d'une telle excroissance 14 est choisie de façon à plaquer l'écran thermique 61 sur la caisse 51 pour permettre une répartition de l'effort de maintien de l'écran thermique 61 tout en assurant la fixation du plot 11 à la caisse 51. La distance qui sépare la surface d'appui 13 et la face d'appui de l'excroissance 14 est choisie de telle façon qu'il existe une force de contre effort permettant d'assurer le maintient de l'écran thermique 61. Cette excroissance 14 peut être effectuée par un moulage.

Ce dispositif peut également être appliqué à un plot progressif.

## Revendications

1. Dispositif de maintien d'un écran thermique (61) entre un élément de caisse (51) et un plot d'échappement (11) qui sont fixés l'un à l'autre par un moyen de fixation (21) **caractérisé en ce qu'**une excroissance (14) est intercalée entre l'écran thermique (61) et le plot (11) de façon à exercer une pression sur l'écran thermique (61) quand le plot d'échappement (11) est fixé par sa surface d'appui (13) sur la caisse (51).

2. Dispositif de maintien d'un écran thermique (61) selon la revendication 1 **caractérisé en ce que** l'excroissance (14) est en caoutchouc et est portée par le plot d'échappement (11).

3. Dispositif de maintien d'un écran thermique (61) selon la revendication 2 **caractérisé en ce que** l'excroissance (14) est moulée sur le plot (11).

4. Dispositif de maintien d'un écran thermique (61) selon la revendication 1 **caractérisé en ce que** l'excroissance (14) est portée par l'écran thermique (61).

5. Dispositif de maintien d'un écran thermique (61) selon l'une des revendications précédentes, **caractérisé en ce que** l'écran thermique (61) comporte une découpe (62) de façon à laisser passer la surface d'appui (13) pour permettre de fixer directement la surface d'appui (13) sur la caisse (51) par le moyen de fixation (21).

6. Dispositif de maintien d'un écran thermique (61) selon l'une des revendications précédentes, **caractérisé en ce que** la surface d'appui (13) comporte un moyen anti-rotation qui peut être par exemple une rugosité.

7. Plot d'échappement (11) comportant un dispositif de maintien d'un écran thermique (61) selon l'une des revendications précédentes 1 à 3.

8. Ligne d'échappement (41) comportant un plot d'échappement (11) comportant un dispositif de maintien d'un écran thermique (61) selon l'une des revendications précédentes 1 à 3.

## Claims

1. Device for holding a heat screen (61) between a body shell element (51) and an exhaust mounting (11) that are attached to one another by a fastening means (21), **characterized in that** an excrescence (14) is inserted between the heat screen (61) and the mounting (11) so as to exert a pressure on the heat screen (61) when the exhaust mounting (11) is attached by its bearing surface (13) to the body shell (51).

2. Device for holding a heat screen (61) according to Claim 1, **characterized in that** the excrescence (14) is made of rubber and is supported by the exhaust mounting (11).

3. Device for holding a heat screen (61) according to Claim 2, **characterized in that** the excrescence (14) is moulded onto the mounting (11).

4. Device for holding a heat screen (61) according to Claim 1, **characterized in that** the excrescence (14) is supported by the heat screen (61).

5. Device for holding a heat screen (61) according to one of the preceding claims, **characterized in that** the heat screen (61) comprises a cut-out (62) so as to allow the bearing surface (13) to pass through in order to make it possible to attach the bearing surface (13) directly to the body shell (51) via the fastening means (21).

6. Device for holding a heat screen (61) according to one of the preceding claims, **characterized in that** the bearing surface (13) comprises an anti-rotation means which may for example be a roughness.

7. Exhaust mounting (11) comprising a device for holding a heat screen (61) according to one of the preceding Claims 1 to 3.

8. Exhaust line (41) comprising an exhaust mounting (11) comprising a device for holding a heat screen (61) according to one of the preceding Claims 1 to 3.

## Patentansprüche

1. Vorrichtung zum Halten einer Wärmeabschirmung (61) zwischen einem Karosserieelement (51) und einem Auspuff-Befestigungselement (11), die aneinander durch ein Befestigungsmittel (21) befestigt sind, **dadurch gekennzeichnet, dass** zwischen die Wärmeabschirmung (61) und das Befestigungselement (11) eine Erhebung (14) eingefügt ist, derart, dass auf die Wärmeabschirmung (61) ein Druck ausgeübt wird, wenn das Auspuff-Befestigungselement (11) mit seiner Abstützoberfläche (13) an der Karosserie (51) befestigt wird.

2. Vorrichtung zum Halten einer Wärmeabschirmung (61) nach Anspruch 1, **dadurch gekennzeichnet, dass** die Erhebung (14) aus Kautschuk besteht und von dem Auspuff-Befestigungselement (11) getragen wird.

3. Vorrichtung zum Halten einer Wärmeabschirmung (61) nach Anspruch 2, **dadurch gekennzeichnet, dass** die Erhebung (14) auf das Befestigungselement (11) gegossen ist.

4. Vorrichtung zum Halten einer Wärmeabschirmung (61) nach Anspruch 1, **dadurch gekennzeichnet, dass** die Erhebung (14) von der Wärmeabschirmung (61) getragen wird.

5. Vorrichtung zum Halten einer Wärmeabschirmung (61) nach einem der vorhergehenden Ansprüche, **dadurch gekennzeichnet, dass** die Wärmeabschirmung (61) einen Ausschnitt (62) aufweist, derart, dass die Abstützoberfläche (13) hindurch passt, um eine direkte Befestigung der Abstützoberfläche (13) an der Karosserie (51) durch das Befestigungsmittel (21) zu ermöglichen.

6. Vorrichtung zum Halten einer Wärmeabschirmung (61) nach einem der vorhergehenden Ansprüche, **dadurch gekennzeichnet, dass** die Abstützoberfläche (13) ein Drehverhinderungsmittel enthält, das beispielsweise eine Unebenheit sein kann.

7. Auspuff-Befestigungselement (11), das eine Vorrichtung zum Halten einer Wärmeabschirmung (61) nach eine der vorhergehenden Ansprüche 1 bis 3 enthält.

8. Auspuffleitung (41), die ein Auspuff-Befestigungselement (11) enthält, das eine Vorrichtung zum Halten einer Wärmeabschirmung (61) nach einem der vorhergehenden Ansprüche 1 bis 3 enthält.
